# DEMANDE DE BREVET EUROPEEN

(11) **EP 4 759 638 A1**
(43) Date de publication de la demande: **17.06.2026**
(21) Numéro de dépôt: 25221710.4
(22) Date de dépôt: 09.12.2025
(51) Int. Cl.: B60R 16/04, H01M 50/242, B60K 1/04, H01M 50/249

(54) **STRUCTURE DE PROTECTION D'UNE BATTERIE ÉLECTRIQUE ET VÉHICULE AUTOMOBILE COMPRENANT UNE TELLE STRUCTURE DE PROTECTION**

(30) Priorité: 10.12.2024 FR 2413776
(71) Demandeur: FLEXIS, 92100 Boulogne-Billancourt (FR)
(72) Inventeur: HANOUEL, Christophe, 78280 GUYANCOURT (FR); WISS, Nicolas, 78460 CHEVREUSE (FR)
(74) Mandataire: Lavoix

(57) **Abrégé**

Structure de protection de batterie électrique dans un véhicule automobile ayant un axe longitudinal (X), un axe transversal (Y) et un axe vertical (Z), la structure de protection comprenant une traverse de support (6) et un protecteur (10) définissant ensemble un logement (LG) pour loger une batterie électrique, le protecteur comprenant au moins un premier flasque de défense (1) destinée à se déformer en dissipant de l'énergie sous application d'une force selon l'axe longitudinal, le protecteur comprenant un bandeau de liaison supérieur (3) relié au moins au premier flasque de défense, la structure de protection comprenant au moins quatre fixations vissées pour relier le protecteur à la traverse de support (6), le flasque de défense (1) présentant une première dimension (L1) selon l'axe longitudinal, au moins 10% supérieure à la dimension (LBX) de la batterie électrique selon l'axe longitudinal.

## Description

La présente invention se rapporte à une structure de protection d'une batterie électrique de véhicule automobile. Cette structure de protection est destinée à protéger l'intégrité mécanique de la batterie en cas notamment d'accident frontal subi par le véhicule.

On s'intéresse ici en particulier à des véhicules automobiles qui présentent un porte-à-faux avant réduit.

La batterie en question est ici une batterie de servitude qui alimente un certain nombre d'équipements électroniques et qui doit rester fonctionnelle après la survenance d'un accident, notamment d'un choc frontal. Le maintien fonctionnel de la batterie permet en particulier d'alimenter la décondamnation des portes, les feux de détresse du véhicule, la fonctionnalité d'appel d'urgence, etc.

Le terme 'crash' est devenu consacré, dans le langage du métier et dans le langage commun, comme un équivalent d'une situation de choc accidentel.

Notamment, le terme « crash-test » désigne un essai de choc accidentel réalisé sur un véhicule dans des conditions prédéfinies. Il existe une série de crash-tests de référence dont certains sont d'un intérêt particulier au sens du présent document.

Dans les configurations connues de véhicules, la batterie électrique, si elle est implantée dans le compartiment moteur à l'avant, n'est pas directement exposée à une éventration par une pénétration d'un autre élément mécanique du véhicule ou même d'un corps étranger. En effet, le porte-à-faux avant, suffisamment conséquent, permet de loger la batterie à distance des zones durement endommagées par les chocs des crash tests de référence.

Dans d'autres configurations connues de véhicules, la batterie électrique est implantée dans une autre partie du véhicule, moins vulnérable aux conséquences d'un choc avant.

Par ailleurs, un type de véhicule, ou plus largement une plateforme technique de véhicule, doit être développé avec une version en conduite à gauche c'est-à-dire avec le volant de conduite placé à gauche d'un plan médian vertical du véhicule, et avec une version en conduite à droite c'est-à-dire avec le volant de conduite placé à droite du plan médian vertical du véhicule.

La protection de la batterie de servitude doit être assurée à la fois pour la version conduite à gauche et pour la version conduite à droite.

Les inventeurs ont cherché à proposer une solution qui permette de placer la batterie de servitude dans le compartiment moteur avant, dans une configuration de porte-à-faux avant réduit, la solution permettant d'éviter un endommagement substantiel de la batterie de servitude lors des chocs des crash tests de référence. Optionnellement, la solution recherchée pourrait convenir pour les véhicules à direction à droite et les véhicules à direction à gauche indifféremment.

A cet effet, il est proposé ici une structure de protection de batterie électrique dans un véhicule automobile ayant un axe longitudinal, un axe transversal et un axe vertical, la structure de protection comprenant une traverse de support et un protecteur définissant ensemble un logement pour loger une batterie électrique, le protecteur comprenant au moins un premier flasque de défense destiné à se déformer en dissipant de l'énergie sous application d'une force de crash selon l'axe longitudinal, le protecteur comprenant un bandeau de liaison supérieur relié au moins au premier flasque de défense, la structure de protection comprenant au moins quatre fixations vissées pour relier le protecteur à la traverse de support, le flasque de défense présentant une première dimension selon l'axe longitudinal, au moins 10% supérieure à la dimension de la batterie électrique selon l'axe longitudinal.

Exprimé selon une autre formulation, le premier flasque de défense forme un petit longeron d'une longueur comprise typiquement entre 20 cm et 30 cm (plus longue que la dimension en X de la batterie), ce longeron forme un élément absorbeur de choc protégeant la batterie dans la configuration de choc frontal. Le premier flasque de défense peut être qualifié de 'latéral' car il se situe à proximité d'une paroi latérale de la batterie. Le premier flasque de défense s'étend notamment le long de l'axe longitudinal, et c'est dans cette direction que se produit l'écrasement qui permet d'absorber de l'énergie.

Il s'avère qu'en l'absence d'un tel élément protecteur, dans une configuration de véhicule à porte-à-faux avant de faible valeur, la batterie est substantiellement endommagée, notamment par le crash test 'barrière' à 56 km/h ou le crash test 'poteau', et les fonctions électriques qui sont supportées par la batterie de servitude peuvent ne plus être assurées à partir du moment du crash.

Grâce aux dispositions proposées ci-dessus, on obtient une configuration d'un véhicule automobile à porte-à-faux avant réduit, typiquement inférieur à 850 millimètres, avec une batterie de servitude implantée dans le compartiment moteur avant, ladite batterie de servitude étant protégée par la structure de protection proposée, au moins pour un sous-ensemble de crash-tests de référence.

On remarque aussi que le premier flasque de défense vient s'appuyer, en reculant sous l'effet du crash, sur un élément du tablier du véhicule, qui est un élément de structure du véhicule qui sépare l'habitacle du compartiment moteur avant. Autrement dit, le flasque de défense talonne sur une butée en X puis s'écrase ensuite selon X.

Le terme « flasque de défense » exprime la fonction de défense et protection procurée à la batterie électrique vis-à-vis de potentielles agressions mécaniques venant de l'avant du véhicule, occasionnées par les conséquences d'un choc avant. On aurait tout aussi bien utilisé le terme « armature de défense » ou « poutrelle de défense/protection ».

Concernant la terminologie « compartiment moteur avant », on utilise ce terme quel que soit le type de motorisation, e.g. thermique, hybride ou électrique.

On remarque que la batterie de servitude peut être du type au plomb ou du type lithium-ion, et plus généralement la batterie peut être de tout type électrochimique.

Selon une réalisation avantageuse, le protecteur peut comprendre en outre un deuxième flasque de défense destiné à se déformer en dissipant de l'énergie sous application d'une force de crash selon l'axe longitudinal, les premier et deuxième flasques de défense encadrant la batterie électrique selon l'axe transversal.

Ainsi, la batterie est protégée des deux côtés (gauche et droite), la symétrie de la protection est améliorée. De plus, l'énergie absorbée par la déformation des deux flasques de défense est augmentée.

En pratique, le logement est délimité à droite et à gauche par les premier et deuxième flasques de défense. On remarque que le logement est généralement prismatique et parallélépipédique. On remarque aussi que le logement laisse un espace libre à l'avant de la batterie comme il sera expliqué plus en détail plus loin.

Les deux flasques de défense sont parallèles l'un par rapport à l'autre. Ils s'étendent généralement dans un plan XZ.

Dans cette configuration, le bandeau de liaison supérieur est relié à la fois au premier flasque de défense et au deuxième flasque de défense.

Selon une réalisation, le long de l'axe vertical, la hauteur des premier et deuxième flasques de défense est au moins égale à 60% de la hauteur de la batterie de servitude, de préférence au moins 70% de la hauteur de la batterie.

Selon une réalisation, dans la zone des bornes électriques de la batterie de servitude, les premier et deuxième flasques de défense restent plus basses que les bornes électriques de la batterie de servitude. On diminue ainsi les risques de contact du protecteur avec les bornes électriques, même en cas de déformations locales.

Selon une réalisation, le bandeau de liaison supérieur ne recouvre pas les bornes électriques de la batterie de servitude. Comme mentionné précédemment, ici aussi on diminue ainsi les risques de contact du protecteur avec les bornes électriques, même en cas de déformations locales.

Selon une réalisation, la structure de protection peut comprendre en outre une plaque avant reliant les bords avant des premier et deuxième flasques de défense.

Moyennant quoi, toute la face avant de la batterie de servitude peut être protégée d'agression(s) mécanique(s) ponctuelle(s). Les faces latérales et la face avant sont délimités par des plaques de protection du protecteur.

Il s'avère que cette plaque avant permet d'éviter toute perforation de la batterie, ce qui est un critère déterminant dans le cas où la batterie de servitude est du type lithium-ion.

Selon une réalisation, la hauteur de la plaque avant est identique ou similaire à la hauteur des premier et deuxième flasques de défense. Alternativement, la plaque avant peut présenter une hauteur plus importante que la hauteur des flasques de défense latéraux.

Selon une réalisation, la structure de protection comprend en outre un bac de rétention de liquide.

La présence du bac est compatible avec la configuration de la structure de protection. Le bac est situé essentiellement sous la batterie et comprend des rebords montants. Les fixations du protecteur traversent des pattes de fixation du bac ou même directement le bac lui-même pour aller se visser dans la traverse de support.

Selon une réalisation, le protecteur est une mono-pièce en tôle métallique fabriquée par découpage et pliage à partir d'un flan de tôle épaisse, d'une épaisseur comprise entre 2 mm et 2,5 mm.

Il s'agit donc d'une pièce facile à fabriquer avec un procédé disponible et un coût de revient raisonnable.

En outre, il peut être prévu des pliures formant nervures de renfort. Lesdites nervures de renfort s'étendent avantageusement selon l'axe longitudinal X.

Selon une réalisation, il est prévu une distance minimale prédéterminée séparant les bornes positive et négative de la batterie de servitude d'un élément le plus proche du protecteur. On peut choisir pour la distance minimale prédéterminée une valeur de 25 mm.

Cette distance minimale permet d'éviter un contact indésirable d'une des bornes de la batterie, notamment la borne positive, avec un élément métallique externe, ce qui provoquerait un court-circuit.

Selon une réalisation, les quatre fixations (ou plus) fixent à la fois le protecteur et le bac de rétention sur la traverse de support, et/ou sur un élément de caisse du véhicule.

Dit autrement, les mêmes fixations enserrent le protecteur et le bac. Ainsi, l'adjonction du protecteur ne conduit pas à une augmentation du nombre de fixations.

Selon une réalisation, le bandeau de liaison supérieur comprend des éléments d'attache pour y fixer un boitier à fusibles. Moyennant quoi, le protecteur intègre des fonctions supplémentaires à la fonction de protection pure, pour fixer des éléments auxiliaires comme un boîtier à fusibles primaire ou un coupe-circuit, un cache bornes plastique, ou encore tout autre élément relié à la tête de distribution électrique qui part de la batterie de servitude.

La présente invention vise aussi un véhicule automobile, présentant un axe longitudinal, un axe transversal et un axe vertical, de préférence électrique ou hybride, avec un porte-à-faux avant de moins de 850 mm, le véhicule comprenant une batterie de servitude électrique agencée dans une zone de porte-à-faux avant, le véhicule comprenant une structure de protection telle que décrite précédemment.

Avantageusement, la structure de protection permet ainsi de pouvoir placer la batterie de servitude dans le compartiment moteur avant, alors que la faible valeur du porte-à-faux avant rend à priori cette position défavorable.

La présente invention vise aussi un ensemble comprenant au moins un premier véhicule automobile tel que décrit précédemment et un deuxième véhicule automobile tel que décrit précédemment, le premier véhicule automobile étant de type conduite à gauche et le deuxième véhicule automobile étant de type conduite à droite, caractérisé en ce que la position de la batterie de servitude électrique est identique pour les premier et deuxième véhicules.

Moyennant quoi, on a une position unique de la batterie de servitude, quelle que soit la position du volant de conduite, à savoir à droite ou à gauche, ce qui permet de rationaliser la diversité des pièces et de diminuer le temps de conception.

L'invention sera davantage détaillée par la description de modes de réalisation non limitatifs, et sur la base des figures annexées illustrant des variantes de l'invention, dans lesquelles :
- la figure 1 représente schématiquement de profil une zone avant de véhicule présentant un porte-à-faux de faible valeur ;
- la figure 2 représente schématiquement en vue de face la zone avant du véhicule de la figure 1;
- la figure 3 représente schématiquement en vue de perspective une batterie protégée par un exemple de structure de protection selon la présente invention ;
- la figure 4 représente schématiquement en vue de perspective un autre exemple de structure de protection ;
- la figure 5 représente schématiquement en vue de côté une batterie de servitude ainsi que le protecteur qui la protège, dans un état normal ;
- la figure 6 est analogue à la figure 5 et représente la batterie de servitude et le protecteur dans un état postérieur à un crash ;

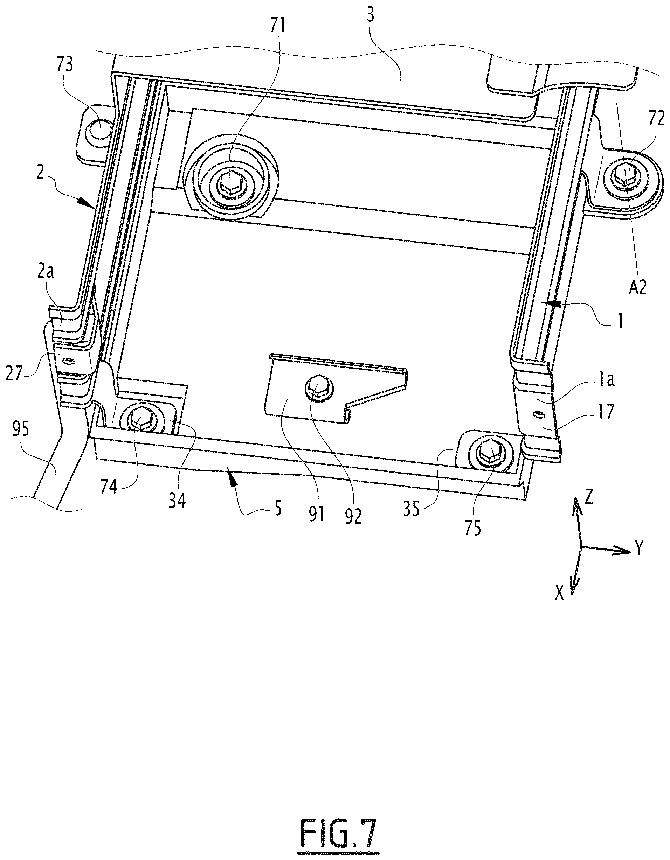

- la figure 7 représente schématiquement le bac batterie et les fixations ;
- la figure 8 représente un boîtier fusible monté sur le bandeau de liaison supérieur ;
- la figure 9 représente une vue de dessus de la zone de batterie avant le crash et après le crash.

Sur les différentes figures, les mêmes références désignent des éléments identiques ou similaires. Pour des raisons de clarté de l'exposé, certains éléments ne sont pas nécessairement représentés à l'échelle.

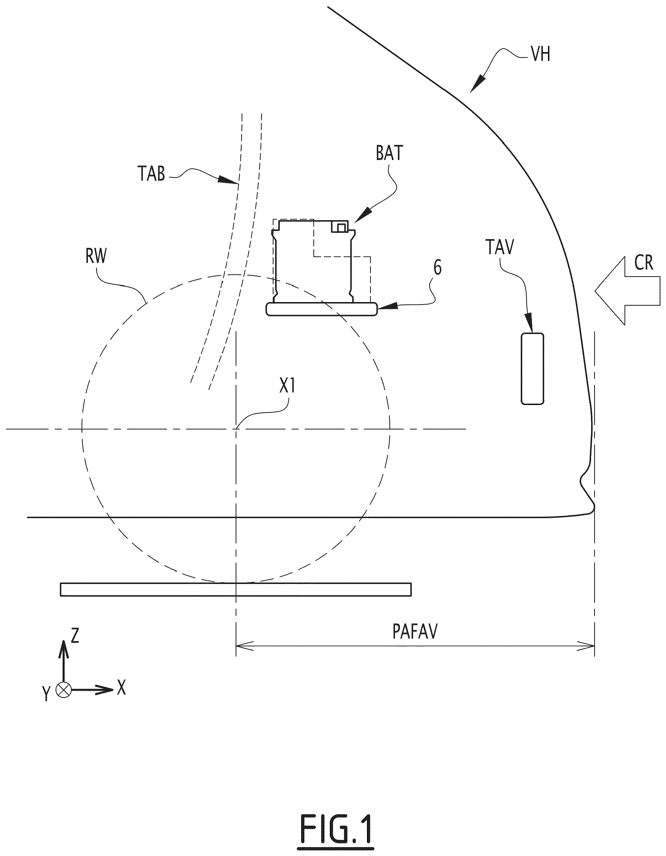

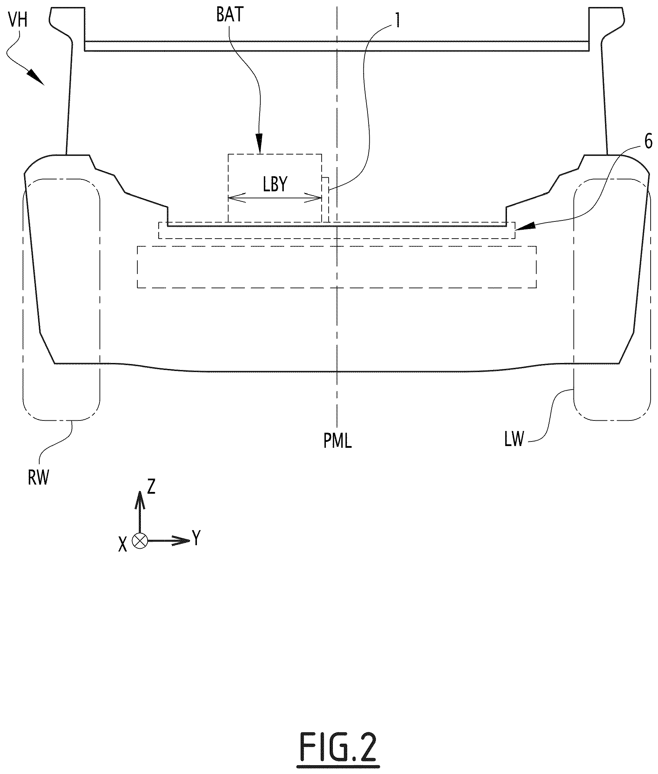

Les figures 1 et 2 montrent une partie antérieure d'un véhicule automobile VH. Le véhicule automobile en question est ici un véhicule de type utilitaire. Il peut s'agir par exemple d'une fourgonnette, d'un fourgon, d'un minibus.

S'agissant du repérage des éléments du véhicule dans l'espace, comme d'usage dans le métier, la direction X correspond à la direction longitudinale du véhicule, la direction Z correspond à la direction verticale par rapport au sol local et la direction Y, perpendiculaire aux deux précédentes, correspond à la direction transversale du véhicule.

Les termes 'avant' et 'arrière' s'apprécient par rapport à la direction longitudinale X en considérant que l'avant correspond au déplacement habituel du véhicule. Les termes 'haut' et 'bas' sont relatifs à direction verticale Z.

Les termes 'gauche' et 'droite' s'apprécient par rapport à la direction transversale Y en regardant selon la direction longitudinale vers l'avant.

Le véhicule en question présente une hauteur hors-tout d'au moins 160 cm, le plus souvent d'au moins 170 cm.

Le véhicule VH comprend un compartiment moteur avant, qui contient un élément de motorisation du train avant du véhicule, cet élément de motorisation pouvant être un moteur thermique, un groupe motopropulseur hybride, ou un moteur électrique pur.

Le véhicule VH est caractérisé par un porte-à-faux avant, noté PAFAV, de faible valeur. Généralement, le porte-à-faux avant PAFAV est inférieur à 850 mm. De préférence, le porte-à-faux avant PAFAV est inférieur à 800 mm. Dans des configurations particulières d'intérêt, le porte-à-faux avant PAFAV est de l'ordre de 750 mm.

Pour rappel, en référence à la figure 1, le porte-à-faux avant est défini par la distance en X qui sépare l'axe X1 des roues du train avant de la partie la plus antérieure, i.e. située la plus à l'avant du véhicule.

Dans la configuration d'intérêt, on comprend que le compartiment moteur dispose d'un espace assez généreux dans le sens vertical Z mais d'un espace très contraint dans le sens longitudinal X.

Par ailleurs, s'agissant d'un véhicule utilitaire, tout l'espace de chargement postérieur à l'habitacle de conduite est généralement dédié à un volume de chargement utile, et par conséquent on évite d'avoir à placer des éléments volumineux tels que la batterie de servitude dans un espace postérieur à l'habitacle de conduite. On note qu'il est possible d'avoir la batterie de traction (batterie principale dans un véhicule à mode de déplacement zéro émission) placée dans le plancher du véhicule c'est-à-dire sous le volume de chargement utile.

Il faut donc composer avec une contrainte de placement de la batterie de servitude, repérée BAT, dans le compartiment moteur avant.

On a illustré aux figures 1 et 2 la position du tablier du véhicule repéré TAB qui sépare le compartiment moteur avant de l'habitacle de conduite (aussi 'cabine' de conduite pour certains utilitaires où le volume de chargement est séparé de l'habitacle de conduite).

Le véhicule est équipé d'une traverse avant TA qui s'étend transversalement dans une position juste en arrière du pare-chocs. Cette traverse avant TA est structurellement reliée à des longerons droite et gauche comme connu et donc non décrit en détails ici. La traverse avant TA est l'un des contributeurs essentiels à la protection dans la configuration de choc accidentel avant.

L'impact du choc avant est repéré CR aux figures 1, 4 et 9.

Le train avant du véhicule comprend une roue gauche notée LW et une roue droite notée RW.

La batterie de servitude BAT repose sur une traverse de support 6. La traverse de support 6 est une pièce métallique qui s'étend transversalement c'est-à-dire généralement selon la direction Y d'un côté à l'autre, reliée à des éléments de caisse appartenant au véhicule.

La traverse de support 6 fait office d'étagère sur laquelle sont posés des éléments accessoires des systèmes du véhicule notamment le système de gestion thermique. Certains éléments accessoires sont fixés sous la traverse de support. La traverse de support 6 est qualifiée de traverse multifonctions.

S'agissant de la batterie de servitude BAT, elle repose sur la traverse de support 6, dans une position à droite du plan médian vertical longitudinal PML (Y=0) comme visible à la figure 2.

La batterie de servitude BAT comprend en partie supérieure une borne positive B+ et une borne négative B-.

Les bornes positive et négative sont alignées généralement selon la direction transversale Y. Les bornes sont situées côté avant.

Selon un autre point de vue, au vu de l'exigence de compacité en X, la plus petite dimension de la batterie (notée ici LBX) est alignée sur l'axe longitudinal X. LBX peut être compris entre 160 mm et 180 mm.

La longueur de la batterie, dirigée selon la direction transversale Y, est notée LBY. LBY est généralement supérieur à LBX.

La hauteur de la batterie est notée HB.

Avantageusement selon la présente invention, la batterie bénéficie d'une structure de protection qui préserve son intégrité en cas de survenance d'un choc avant subi par le véhicule.

La structure de protection est basée sur la traverse de support 6 déjà décrite. Il est prévu en outre un protecteur 10, qui va être décrit dans les paragraphes suivants.

Dans l'exemple illustré, le protecteur comprend un premier flasque de défense 1, situé à gauche de la batterie, et un deuxième flasque de défense 2 situé à droite de la batterie. Les premier et deuxième flasques de défense encadrent la batterie selon la direction transversale Y. Les premier et deuxième flasques de défense ne sont pas forcément au contact des parois latérales de la batterie, mais ils se trouvent à faible distance des parois latérales de la batterie, disons à quelque millimètres.

En effet, avantageusement, il est possible de déposer la batterie sans retirer le protecteur 10, et il est aussi d'installer une nouvelle batterie sans enlever le protecteur.

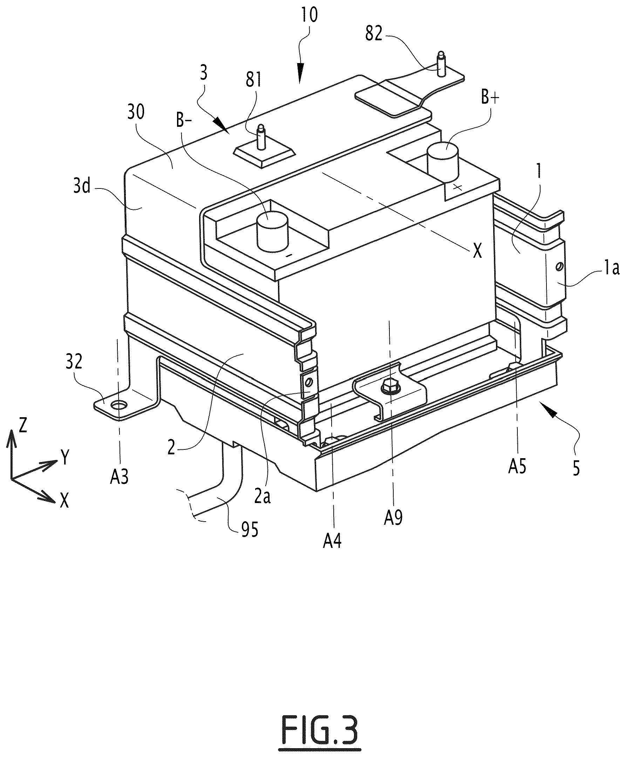

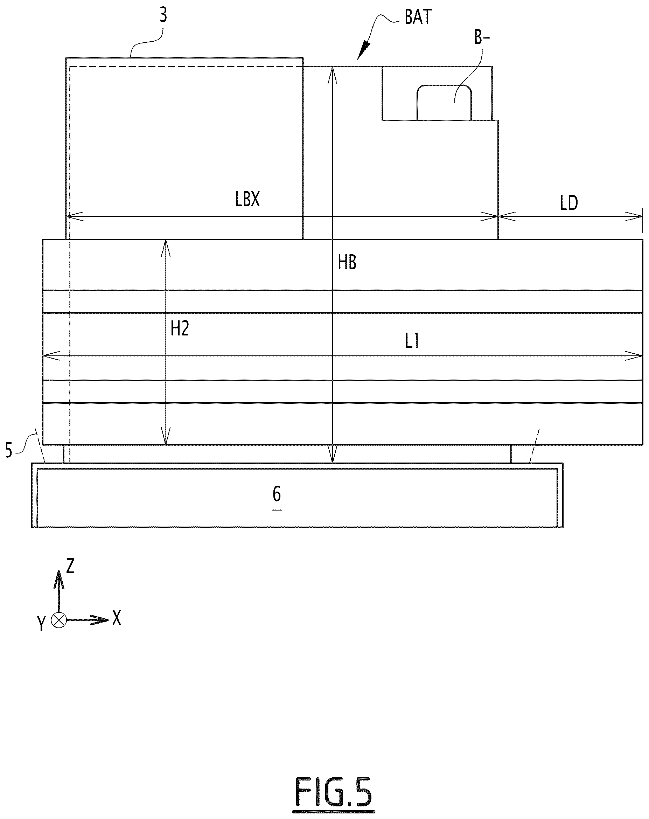

La hauteur H2 des flasques est moins importante que la hauteur HB de la batterie comme ceci est visible aux figures 3 et 5.

Par exemple, la hauteur des premier et deuxième flasques de défense est au moins égale à 60% de la hauteur de la batterie de servitude, de préférence au moins 70% de la hauteur de la batterie, mais reste inférieure à 80% de la hauteur de la batterie de servitude.

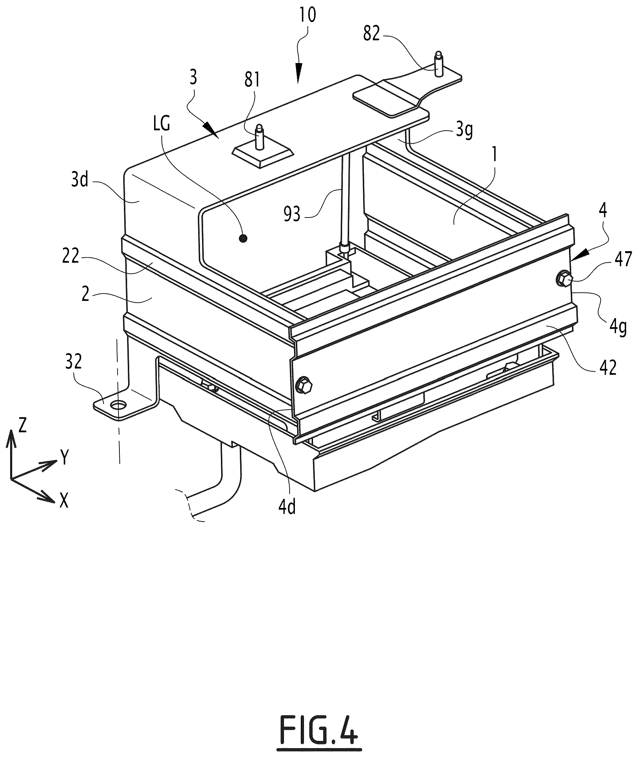

Comme visible sur les figures 3 et 4, la limite basse en Z de chaque flasque de défense ne coïncide pas forcément avec la limite basse de la batterie, car en effet on prévoit de loger un bac de récupération en partie basse de la batterie qui sera discuté plus bas.

Ainsi la limite basse de chaque flasque de défense peut être à une cote verticale qui se trouve au-dessus de la limite basse de la batterie de servitude.

De plus il est prévu un bandeau de liaison supérieur 3 qui est relié à la fois au premier flasque de défense 1 et au deuxième flasque de défense 2.

Pour ce faire, le bandeau de liaison supérieur comprend des rabats verticaux. Il est ainsi prévu un rabat vertical gauche noté 3g et un rabat vertical droit noté 3d.

Le bandeau de liaison supérieur 3 jouxte la face supérieure de la batterie, Le bandeau de liaison supérieur fournit un effet enveloppant et empêche tout retournement de la batterie sous choc.

On remarque que le bandeau de liaison supérieur ne participe pas directement à la protection contre l'écrasement selon X, mais il permet de maintenir les flasques de défense dans la position appropriée pendant le début du choc jusqu'au moment où les flasques sont contactés par la traverse avant ou un autre élément qui vient les écraser en X.

Le protecteur 10 est dans un exemple une mono-pièce en tôle métallique fabriquée par découpage et pliage à partir d'un flan de tôle épaisse, d'une épaisseur comprise entre 2 mm et 2,5 mm.

L'épaisseur est déterminée par la résistance attendue des flasques de défense à l'écrasement en X.

Le flasque de défense gauche 1 comprend un bord avant 1a. Le flasque de défense droite 2 comprend un bord avant 2a. Chaque bord avant comprend un retour coudé formant bande frontale verticale qui s'étend dans le plan YZ. Nous en verrons l'intérêt plus loin.

Il est possible de prévoir sur chaque flasque de défense une ou plusieurs nervure(s) 22 de raidissement en X.

On remarque qu'il est possible d'adjoindre une doublure aux flasques de défense, en complément ou en alternative aux nervures.

Le protecteur 10 est muni de pattes arrière 32 qui comprennent un méplat horizontal troué et qui permettent une fixation par vissage sur la traverse support 6. On remarque que les pattes arrière 32 s'étendent vers l'extérieur dans le sens transversal par rapport au logement de la batterie.

De plus, le protecteur 10 est muni de pattes avant 34,35 qui comprennent aussi chacune un méplat horizontal troué et pour recevoir une fixation par vissage sur la traverse support 6. On remarque que les pattes arrière 32 s'étendent vers l'intérieur dans le sens transversal par rapport au logement de la batterie.

La traverse de support 6 et le protecteur 10 définissent ensemble un logement LG pour loger une batterie.

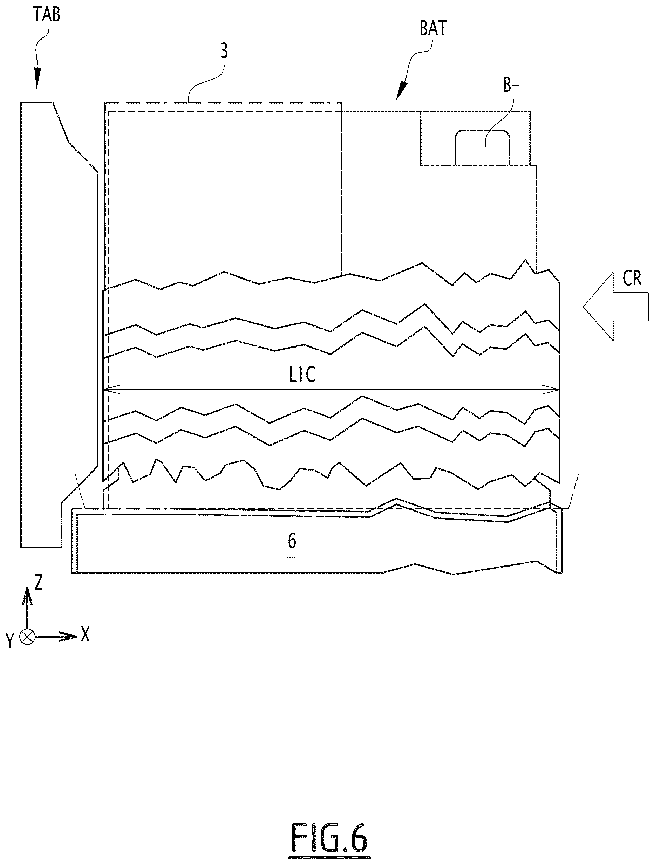

Comme illustré à la figure 5, la longueur normale de chaque flasque de défense est notée LC. Comme illustré à la figure 6, après écrasement conséquence d'un choc avant, la longueur de chaque flasque de défense est réduite à L1C. La déformation liée à la diminution de longueur permet une absorption d'énergie importante et procure une protection de l'intégrité mécanique de la batterie électrique.

Dans l'état normal, les flasques de défense 1,2 dépassent vers l'avant par rapport à la face avant de la batterie d'une dimension LD comme visible à la figure 5. Il peut y avoir également un dépassement vers l'arrière.

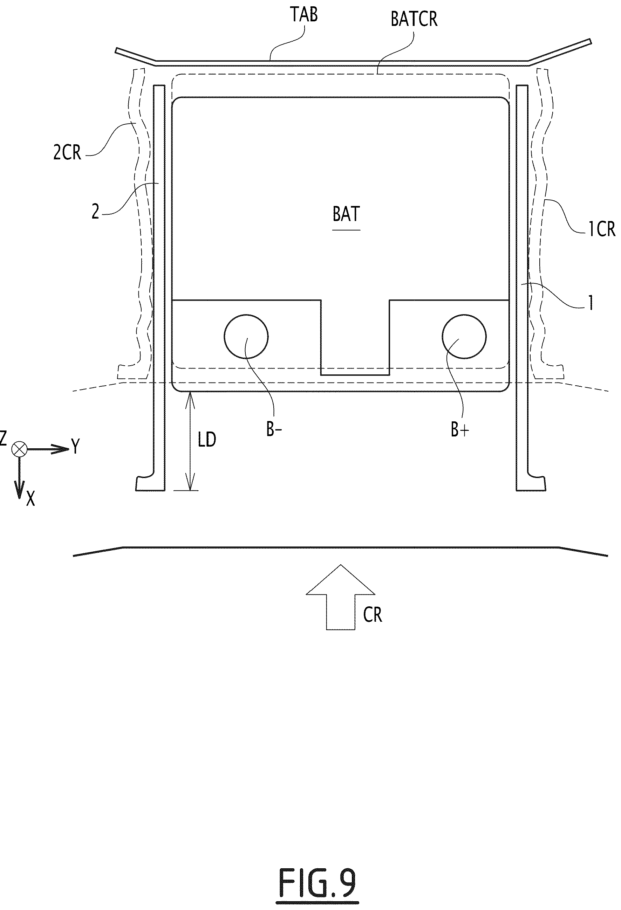

En cas de survenance d'un choc, le dépassement de dimension LD est réduit à une valeur faible, ou même à 0 (cf figures 6 et 9).

On remarque que dans un exemple de réalisation, il n'y a pas de face arrière dans le protecteur. Ceci est rendu possible en l'absence d'éléments mécaniquement agressifs placés à l'arrière de la batterie.

En plus du protecteur, il est prévu un bac de rétention des effluents liquides de la batterie. Ce bac noté 5 est réalisé en matière plastique, il participe à la marge à la protection mécanique de la batterie.

Le bac comprend une dépression basse formant puisard pour collecter les effluents liquides qui ont pu s'échapper de la batterie et les diriger via une conduite 95 vers le sol.

En outre, il est aussi prévu une conduite d'évacuation 93 des effluents gazeux sortant par le dessus de la batterie vers le bac de récupération 5.

Dans l'exemple illustré, le protecteur 10 est fixé à la traverse support par 4 fixations, à savoir une fixation arrière gauche 72 d'axe A2, une fixation arrière droite 73 d'axe A3, une fixation avant droite 74 d'axe A4, et une fixation avant gauche 75 d'axe A5.

Il est prévu également une fixation intérieure 71 qui sert à fixer le bac sur la traverse support. Il est prévu par ailleurs une vis 92 et une plaque métallique 91 comme connu en soi pour le maintien en place de la batterie. La vis 92 vient se visser dans un trou taraudé d'axe A9 prévu dans la traverse support 6.

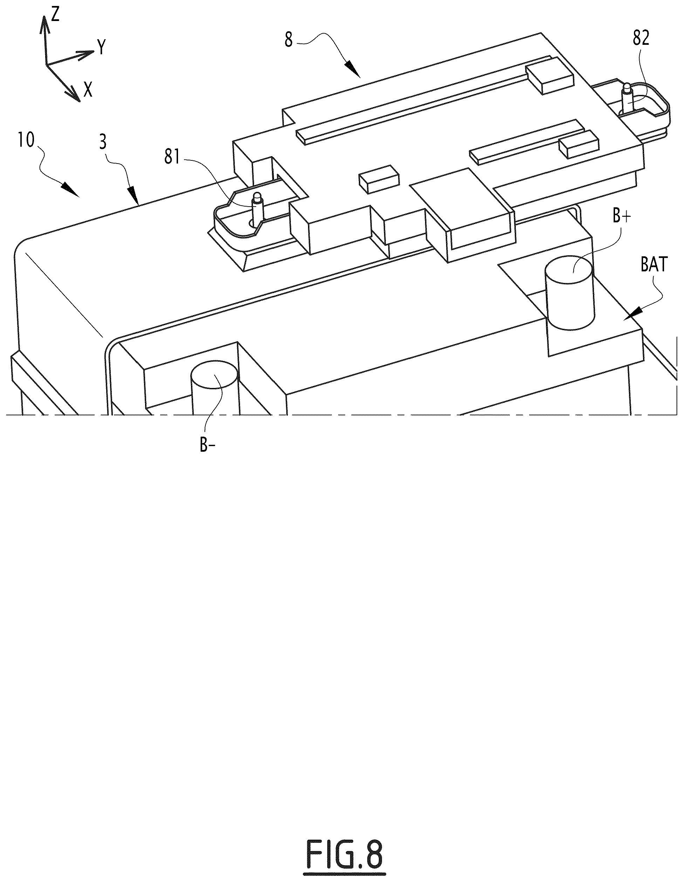

En outre, sur le bandeau de liaison supérieur 3 sont agencés des moyens de fixation d'un boîtier à fusibles. Plus précisément, dans l'exemple illustré, il est prévu un premier goujon soudé 81 et un deuxième goujon soudé 82 qui forment des éléments d'attache (81,82) pour y fixer un boîtier à fusible repéré 8 comme ceci apparaît à la figure 8.

Dans un mode de réalisation optionnelle, le protecteur est complété par une plaque avant 4 reliant les bords avant des premier et deuxième flasques de défense.

Cette plaque avant 4 peut être installée ou pas suivant le type de batterie à protéger. Selon un exemple de réalisation, on installe une telle plaque de protection avant lorsque la batterie de servitude est de type au lithium.

Plus précisément, la plaque avant 4 comprend une bordure gauche 4g assemblée au bord avant 1a du flasque de défense gauche, et une bordure gauche 4d assemblée au bord avant 2a du flasque de défense droite 2.

Le bord avant 1a comprend une bande verticale frontale 17 qui reçoit à plat la bordure gauche 4g de la plaque avant 4. Le bord avant 2a de l'autre flasque comprend aussi une bande verticale frontale 27 qui reçoit à plat la bordure droite 4d de la plaque avant 4.

Les bandes verticales frontales 17,27 de chaque côté permettent, en cas de choc, d'égaliser les efforts transmis par la plaque avant 4 vers les flasques de défense 1 et 2.

L'assemblage peut se faire simplement par des vis 47 comme dans l'exemple illustré, mais tout autre moyen d'assemblage démontable de préférence peut venir.

On note que la plaque avant 4 doit être déposée pour pouvoir déposer la batterie électrique.

Par ailleurs, la plaque avant 4 peut être munie de raidisseurs 42.

En complément ou en alternative, la plaque avant 4 peut être formée comme une pièce à doublure, à savoir deux tôles pliées assemblées l'une à l'autre par soudure.

Le protecteur 10, et la plaque avant 4 lorsqu'elle est présente, sont fabriqués en acier à limite élastique conséquente, de préférence en acier à haute limite élastique.

Selon une option, on applique au protecteur et à la plaque avant le traitement anticorrosion appliqué aux autres pièces de caisse et châssis.

Sur la figure 9, on a illustré la situation nominale en trait plein en vue du dessus et on a illustré en outre en trait pointillé la situation postérieure à un choc avant, avec le premier flasque de défense 1 écrasé et raccourci (repère 1CR) selon X, le deuxième flasque de défense 2 écrasé et raccourci (repère 2CR) selon X, la batterie qui a reculé un peu à la position BATCR.

Concernant le dimensionnement de la longueur de dépassement LD, cette dernière peut être exprimée de façon absolue, par exemple LD peut être comprise entre 35 mm et 55 mm. Selon une alternative, la longueur de dépassement LD peut être exprimée en valeur relative. Par exemple, LD peut être comprise entre 10% de LBX et 15% de LBX.

En fonction des configurations et des essais de crash-tests, il peut s'avérer que la présence d'un seul flasque de défense, en particulier le flasque gauche, suffise à procurer la protection recherchée pour la batterie de servitude.

Ainsi, la batterie est protégée par la présence d'au moins un flasque de défense, il n'est pas toujours nécessaire d'avoir les deux flasques de part et d'autre de la batterie comme illustré aux figures et discuté plus haut.

Il est prévu un premier véhicule automobile de type conduite à gauche et un deuxième véhicule automobile de type conduite à droite. La position de la batterie de servitude électrique est identique pour le véhicule conduite à gauche et pour le véhicule conduite à droite.

On relève que la présente invention peut être appliquée à des véhicules autres que des véhicules utilitaires, par exemple des véhicules urbains de petite taille.

## Revendications

1. Structure de protection de batterie électrique dans un véhicule automobile ayant un axe longitudinal (X), un axe transversal (Y) et un axe vertical (Z), la structure de protection comprenant une traverse de support (6) et un protecteur (10) définissant ensemble un logement (LG) pour loger une batterie électrique, le protecteur comprenant au moins un premier flasque de défense (1) destiné à se déformer en dissipant de l'énergie sous application d'une force selon l'axe longitudinal, le protecteur comprenant un bandeau de liaison supérieur (3) relié au moins au premier flasque de défense, la structure de protection comprenant au moins quatre fixations vissées pour relier le protecteur à la traverse de support (6), le flasque de défense (1) présentant une première dimension (L1) selon l'axe longitudinal, au moins 10% supérieure à la dimension (LBX) de la batterie électrique selon l'axe longitudinal.

2. Structure de protection selon la revendication 1, dans laquelle le protecteur comprend en outre un deuxième flasque de défense (2) destiné à se déformer en dissipant de l'énergie sous application d'une force de crash selon l'axe longitudinal, les premier et deuxième flasques de défense encadrant la batterie électrique selon l'axe transversal (Y).

3. Structure de protection selon la revendication 2, comprenant en outre une plaque avant (4) reliant les bords avant (1a,2a) des premier et deuxième flasques de défense.

4. Structure de protection selon l'une quelconque des revendications 1 à 3, comprenant en outre un bac de rétention de liquide (5).

5. Structure de protection selon l'une quelconque des revendications 1 à 4, dans laquelle le protecteur (10) est une mono-pièce en tôle métallique fabriquée par découpage et pliage à partir d'un flan de tôle épaisse, d'une épaisseur comprise entre 2 mm et 2,5 mm.

6. Structure de protection selon l'une quelconque des revendications 1 à 5, dans laquelle il est prévu une distance minimale prédéterminée séparant les bornes positive et négative (B+, B-) de la batterie de servitude d'un élément le plus proche du protecteur.

7. Structure de protection selon l'une quelconque des revendications 1 à 6, dans laquelle les quatre fixations fixent à la fois le protecteur et le bac de rétention sur la traverse de support, et/ou sur un élément de caisse du véhicule.

8. Structure de protection selon l'une quelconque des revendications 1 à 7, dans laquelle le bandeau de liaison supérieur comprend des éléments d'attache (81,82) pour y fixer un boitier à fusibles (8).

9. Véhicule automobile présentant un axe longitudinal (X), un axe transversal (Y) et un axe vertical (Z), de préférence électrique ou hybride, avec un porte-à-faux avant de moins de 850 mm, le véhicule comprenant une batterie de servitude électrique (BAT) agencée dans une zone de porte-à-faux avant, le véhicule comprenant une structure de protection selon l'une quelconque des revendications 1 à 8.

10. Ensemble comprenant au moins un premier véhicule automobile (VH) selon la revendication 9 et un deuxième véhicule automobile selon la revendication 9, le premier véhicule automobile étant de type conduite à gauche et le deuxième véhicule automobile étant de type conduite à droite, **caractérisé en ce que** la position de la batterie de servitude électrique est identique pour les premier et deuxième véhicules.
